# EUROPÄISCHE PATENTSCHRIFT

(11) **EP 3 791 063 B1**
(45) Veröffentlichungstag und Bekanntmachung des Hinweises auf die Patenterteilung: **21.06.2023**
(21) Anmeldenummer: 19723359.6
(22) Anmeldetag: 07.05.2019
(51) Int. Cl.: F03D 7/04, F03D 17/00, G06F 21/44, H04L 9/32

(54) **VERFAHREN ZUM BETRIEB EINER WINDENERGIEANLAGE, WINDENERGIEANLAGE UND COMPUTERPROGRAMMPRODUKT**
METHOD FOR OPERATING A WIND TURBINE, WIND TURBINE, AND COMPUTER PROGRAM PRODUCT
PROCÉDÉ DE FONCTIONNEMENT D'UNE ÉOLIENNE, ÉOLIENNE ET PRODUIT PROGRAMME INFORMATIQUE

(30) Priorität: 07.05.2018 DE 102018003745
(43) Veröffentlichungstag der Anmeldung: 17.03.2021
(73) Patentinhaber: Siemens Gamesa Renewable Energy Service GmbH, 20097 Hamburg (DE)
(72) Erfinder: WARFEN, Karsten, 23795 Weede/Söhren (DE); BEHL, Stefan, 24536 Neumünster (DE)
(74) Vertreter: Glawe, Delfs, Moll
(86) Internationale Anmeldenummer: PCT/EP2019/061677
(87) Internationale Veröffentlichungsnummer: WO 2019/215147

(56) Entgegenhaltungen:
- EP-A1- 1 519 040
- EP-A1- 3 101 275
- EP-A2- 1 783 365
- EP-B1- 1 519 040
- WO-A2-2008/009354
- DE-A1-102010 033 229

## Beschreibung

Die Erfindung betrifft ein Verfahren zum Betrieb einer Windenergieanlage, eine zur Durchführung dieses Verfahrens ausgebildet Windenergieanlage sowie ein entsprechendes Computerprogrammprodukt.

Windenergieanlagen sind aus dem Stand der Technik bekannt. Sie umfassen einen Rotor, der drehbar um eine im Wesentlichen horizontale Achse an einer Gondel angeordnet ist, wobei die Gondel um eine vertikale Achse drehbar auf einem Turm angeordnet ist. Der Rotor umfasst in der Regel drei, hinsichtlich des Blattanstellwinkels einstellbare Rotorblätter und treibt ggf. über eine Rotorwelle und ein Getriebe einen Generator an. Eine durch Wind induzierte Rotationsbewegung des Rotors kann so in elektrische Energie gewandelt werden, die dann über Umrichter und/oder Transformatoren -je nach Bauart des Generators auch wenigstens teilweise direkt - in ein elektrisches Netz eingespeist werden kann.

Zur Steuerung der diversen Komponenten einer Windenergieanlage ist eine Steuerungseinrichtung unmittelbar an der Windenergieanlage vorgesehen, die auf Basis von unmittelbar an der Windenergie gewonnenen oder von Extern übermittelten Messwerten sowie Steuerungsvorgaben, bspw. durch die Netzbetreiber, die Windenergieanlage steuert. Die Steuerungseinrichtung ist dabei hochkomplex und nur durch Softwareimplementierung zu realisieren. Die softwarebasierte Steuerung wird dabei mit eine Vielzahl von Parametern (häufig 2000-3000 Parameter) parametrisiert.

Um das Umfeld der Windenergieanlage vor Gefahren bei Fehlfunktion der Windenergieanlage und insbesondere deren Steuerungseinrichtung zu schützen, ist eine von der eigentlichen Steuerung getrennt ausgeführte Überwachung vorgesehen, welche die Einhaltung vorgegebener Betriebsbereiche überwacht und bei Verlassen der vorgegebenen Betriebsbereiche die Windenergieanlage ggf. unter Umgehung der Steuerungseinrichtung in einen sicheren Betriebszustand überführt, in der Regel stillsetzt oder in einen leistungslosen Trudelbetrieb überführt. Alternativ oder zusätzlich zu einer rein hardwarebasierten Überwachung als finale Sicherheitsabschaltung, die die Windenergieanlage bspw. rechtzeitig vor dem Auftreten von die strukturelle Integrität gefährdenden Drehzahlen oder Schwingungen stillsetzt, ist auch eine steuerungstechnische Überwachung vorgesehen, welche während dem Betrieb die Einhaltung grundsätzlich frei definierbarer Betriebsbereiche überwacht.

Aufgrund ihrer Sicherheitsrelevanz werden Änderungen an den für die Überwachung vorgegeben Betriebsbereichen sehr restriktiv gehandhabt. In der Regel lassen sich diese Betriebsbereiche nur unmittelbar an der Hardware in der Anlage, z.B. am Drehzahlüberwachungsrelais, oder an einem Terminal in der Anlage selbst durch einen über Benutzername und Passwort identifizierten, dafür besonders qualifizierten Benutzer ändern. Dies macht die Änderung der für die Überwachung vorgegeben Betriebsbereiche sehr aufwendig, weshalb sie tendenziell konservativ ausgelegt werden, um über die Lebensdauer einer Windenergieanlage wenn möglich gar nicht verändert werden zu müssen. Selbst wenn entsprechende Änderungen nur durch besonders qualifizierte Benutzer durchgeführt werden, lassen sich Fehler bei der Eingabe der einen Betriebsbereich definierenden Parameter dennoch nicht vollständig ausschließen.

Aufgrund der stetig steigenden Komplexität von Windenergieanlagen und der teilweise erst im Laufe des Betriebs von Windenergieanlagen eines bestimmten Typs zu gewinnenden Erkenntnissen zu deren optimalen, das Potential der Windenergieanlagen bestmöglich ausnutzenden Betrieb, ist es wünschenswert, die Betriebsbereiche über die Lebensdauer einer Windenergieanlage ggf. auch mehrfach zu verändern. Im Stand der Technik würde dies jedoch einen enormen Aufwand und eine Vielzahl dafür besonders qualifizierter Benutzer erfordern, wobei dabei weiterhin die Gefahr einer kritischen Fehldefinition eines Betriebsbereiches besteht. Ein Beispiel aus dem Stand der Technik ist in WO2008/009354 A2 offenbart.

Aufgabe der vorliegenden Erfindung ist es daher, ein Verfahren zum Betrieb einer Windenergieanlage, eine Windenergieanlage sowie ein Computerprogrammprodukt zu schaffen, bei der die Nachteile aus dem Stand der Technik nicht mehr oder nur noch im vermindertem Umfang auftreten.

Gelöst wird diese Aufgabe durch ein Verfahren gemäß dem Hauptanspruch, eine Windenergieanlage gemäß dem Anspruch 12 sowie ein Computerprogrammprodukt gemäß Anspruch 13. Vorteilhafte Weiterbildungen sind Gegenstand der abhängigen Ansprüche.

Demnach betrifft die Erfindung ein Verfahren zum Betreiben einer Windenergieanlage umfassend ein Betriebsführungssystem zur Steuerung der Windenergieanlage gemäß vorgegebenen Regeln und ein vom Betriebsführungssystem getrenntes Sicherheitssystem zur Überwachung der Windenergieanlage anhand von Betriebskennwerten, wobei das Sicherheitssystem die Windenergieanlage unabhängig vom Betriebsführungssystem in einen sicheren Anlagenzustand überführt, wenn sicherheitskritische Betriebskennwerte gegen im Sicherheitssystem hinterlegte Sicherheitsparameter verstoßen, wobei zur Änderung wenigstens eines im Sicherheitssystem hinterlegten Sicherheitsparameter dem Sicherheitssystem ein Parameterblock umfassend den wenigstens einen Sicherheitsparameter und wenigstens zwei Sicherungsmerkmale zugeführt und nur nach positiver Prüfung aller Sicherungsmerkmale von dem Sicherheitssystem für die Überwachung übernommen wird, wobei die Prüfung wenigstes eines der Sicherungsmerkmale den Abgleich mit unmittelbar an der Windenergieanlage verfügbaren Prüfinformationen erfordert.

Weiterhin betrifft die Erfindung eine Windenergieanlage umfassend einen Rotor mit mehreren, hinsichtlich des Blattwinkels einstellbaren Rotorblättern, der drehbar an einer drehbar auf einem Turm angeordneten Gondel angeordnet und mit einem in der Gondel angeordneten Generator zur Umwandlung von auf den Rotor einwirkenden Windenergie in elektrische Energie verbunden ist, ein Betriebsführungssystem zur Steuerung der Windenergieanlage gemäß vorgegebenen Regeln und ein vom Betriebsführungssystem getrenntes Sicherheitssystem zur Überwachung der Windenergieanlage anhand von Betriebskennwerten, wobei das Sicherheitssystem dazu ausgebildet ist, die Windenergieanlage unabhängig vom Betriebsführungssystem in einen sicheren Anlagenzustand zu überführen, wenn sicherheitskritische Betriebskennwerte gegen im Sicherheitssystem hinterlegte Sicherheitsparameter verstoßen, wobei die Windenergieanlage zur Durchführung des erfindungsgemäßen Verfahrens ausgebildet ist.

Die Erfindung betrifft auch ein Computerprogrammprodukt umfassend Programmteile, welche, wenn geladen in einem Computer, vorzugsweise die Anlagensteuerung einer Windenergieanlage, zur Durchführung des erfindungsgemäßen Verfahrens ausgelegt sind.

Zunächst werden einige in Zusammenhang mit der Erfindung verwendete Begriffe erläutert:
Mit "Betriebskennwerten" sind während des Betriebs einer Windenergieanlage gemessene oder aus gemessenen Größen abgeleitete Ist-Werte und/oder von dem Betriebsführungssystem ermittelte Soll-Werte gemeint, welche den aktuellen Betriebszustand der Windenergieanlage und deren Komponenten widerspiegeln.

"Konfigurationsparameter" sind Informationen zu der Windenergieanlage selbst, bspw. deren technische Eckdaten oder Typenbezeichnungen der Windenergieanlage oder deren Komponenten.

Über "Sicherheitsparameter" kann ein zulässiger Betriebszustand bzw. ein zulässiges Betriebsfenster definiert werden. Die Sicherheitsparameter können bspw. feste oder in Abhängigkeit der Betriebskennwerte veränderliche Grenzwerte und/oder feste oder in Abhängigkeit der Betriebskennwerte Grenz-Kennlinien veränderliche umfassen.

Indem erfindungsgemäß neue Sicherheitsparameter dem Sicherheitssystem in Form eines Parameterblocks, der darüber hinaus noch Sicherungsmerkmale aufweist, zugeführt werden, kann sichergestellt werden, dass nur für die jeweilige Windenergieanlage geeignete Sicherheitsparameter von dem Sicherheitssystem übernommen und der letztendlichen Überwachung zugrunde gelegt werden. Dies wird gewährleistet, indem die Prüfung wenigstens eines der Sicherungsmerkmale den Abgleich mit unmittelbar an der Windenergieanlage verfügbaren Prüfinformationen erfordert. Dadurch werden nur solche Sicherheitsparameter tatsächlich übernommen, für die positiv festgestellt wurde, dass sie für die jeweilige Windenergieanlage entweder unmittelbar vorgesehen oder zumindest vollumfänglich geeignet sind. Indem eine entsprechende Sicherungsprüfung durchgeführt wird, kann die Übernahme wenigstens eines Sicherheitsparameters des Sicherheitssystems, was auch eine Aktualisierung zuvor hinterlegter Sicherheitsparameter bedeuten kann, durch einen beliebigen Nutzer unmittelbar an der Anlage selbst erfolgen, bspw. durch Zuführen des Parameterblocks über eine geeignete Schnittstelle. Auch ist ein Zuführen bzw. eine Aktualisierung von Sicherheitsparametern per Fernwartung bzw. Datenfernübertragung prinzipiell möglich. Anders als im Stand der Technik ist es also nicht mehr grundsätzlich erforderlich, dass die Änderungen an den für die Überwachung vorgegeben Betriebsbereichen durch einen besonders qualifizierter Nutzer unmittelbar an der Windenergieanlage selbst durchgeführt werden müssen. Aufgrund der hochkritischen Bedeutung der Sicherheitsparameter für den Betrieb und die Sicherheit einer Windenergieanlage ist es dabei bevorzugt, wenn die Änderung der im Sicherheitssystem hinterlegten Sicherheitsparameter über eine von der für die Überwachung und Steuerung des Betriebs der Windenergieanlage über das Betriebsführungssystem gesonderte Datenverbindung und/oder über eine besondere Bedienungsoberfläche erfolgt. Bspw. kann für die Veränderung der Sicherheitsparameter ein von der sonstigen Betriebsführung gesondertes Webportal vorgesehen oder eine spezielle Software erforderlich sein, die nur einem besonders qualifizierten Personenkreis zur Verfügung steht. Dadurch wird verhindert, dass die im Sicherheitssystem hinterlegten Sicherheitsparameter unbeabsichtigt verändert werden, wenn eigentlich nur Betriebsparameter der Betriebsführung geändert werden sollen.

Bei den Prüfinformationen, die zur Prüfung wenigstens eines der Sicherungsmerkmale herangezogen werden, kann es sich um Informationen über den Anlagentyp und/oder die Anlagenkonfiguration der Windenergieanlage handeln. Die Informationen über den Anlagentyp einer Windenergieanlage umfassen typischerweise deren (zumindest herstellerintern grundsätzlich eindeutigen) Typbezeichnung, Nennleistung, Rotordurchmesser, Turmhöhe und/oder weitere, bei sämtlichen Windenergieanlagen desselben Anlagentyps identischen Eigenschaften. Über die Anlagenkonfiguration kann anlagenspezifisch angegeben werden, welche Optionen oder Komponenten bei der jeweiligen Windenergieanlage verbaut sind. So können die Windenergieanlagen desselben Anlagentyps mit Komponenten unterschiedlicher Zulieferer ausgestattet sein, sodass zwei Windenergieanlage obwohl vom selben Anlagentyp bspw. unterschiedliche Getriebe oder Anlagensteuerungen aufweisen. Auch ist es möglich, dass nur ein Teil der Windenergieanlagen desselben Anlagentyps mit optionalen Komponenten, wie bspw. einem Enteisungssystem für die Rotorblätter, ausgestattet sind. Diese anlagenspezifischen Besonderheiten der Konfiguration können über dafür vorgesehene Hardwareschalter an dem Betriebsführungssystem eingestellt werden. Dabei ist bevorzugt, wenn wenigstens ein Konfigurationsparameter über einen entsprechenden Hardwareschalter an der Windenergieanlage einstellbar ist, wodurch in der Regel eine hohe Manipulationssicherheit für den entsprechenden Konfigurationsparameter gewährleistet ist. Es ist aber auch möglich, diese während der Inbetriebnahme im Betriebsführungssystem und/oder dem Sicherheitssystem abzulegen. In beiden Fällen stehen die Informationen als Konfigurationsparameter zur Verfügung. Zur Prüfung eines Sicherungsmerkmals anhand von Konfigurationsparametern kann bspw. vorgesehen sein, dass das Sicherungsmerkmal Daten zu in den Konfigurationsparametern abgebildeten Informationen über den Anlagengentyp und die Anlagenkonfiguration umfasst und die Prüfung nur bei vollständiger Übereinstimmung der Daten des Sicherungsmerkmals mit den entsprechenden tatsächlichen Konfigurationsparametern ein positives Ergebnis liefert.

Ein weiteres, zu prüfendes Sicherungsmerkmal kann wenigstens eine Prüfsumme, vorzugsweise eine zyklische Prüfsumme, ein Hash-Wert und/oder eine digitale Signatur über die Sicherheitsparameter, den Parameterblock und/oder jeweils Teile davon sein. Durch entsprechende Maßnahmen kann sichergestellt werden, dass die Sicherheitsparameter, der Parameterblock oder jeweils Teile davon fehlerfrei übertragen und/oder nicht manipuliert sind. Über eine Prüfsumme können bei der Übertragung auftretende Fehler zuverlässig erkannt und der Übertragungsvorgang bei Bedarf wiederholt werden. Es kann vorzugsweise auch eine zyklische Redundanzprüfung vorgesehen sein, die eine sichere Korrektur von Übertragungsfehlern ermöglicht. Um die Sicherheit vor Manipulationen einzelner oder aller Sicherheitsparameter zu erhöhen kann ein Hash-Wert wenigstens für die fraglichen Sicherheitsparameter oder den diese Sicherheitsparameter umfassenden Teil des Parameterblocks ermittelt werden, der durch das Sicherheitssystem überprüft werden kann. Alternativ hierzu kann auch eine digitale Signatur oder eine Verschlüsselung verwendet werden. Es ist auch möglich, die verschiedenen Mechanismen miteinander zu verbinden. So lässt sich bspw. zunächst ein Hash-Wert für einen Parameterblock ermitteln und anschließend eine zyklische Prüfsumme über Parameterblock und Hash-Wert bilden, sodass nach Übertragung von Parameterblock und Hash-Wert zunächst eine Fehlerkontrolle anhand der Prüfsumme durchgeführt werden kann, bevor anschließend die Hash-Wert-Überprüfung erfolgt.

Alternativ oder zusätzlich kann als weiteres Sicherungsmerkmal eine in dem Parameterblock enthaltene Gültigkeitsdauer vorgesehen sein. Über die Gültigkeitsdauer kann vermieden werden, dass für die tatsächliche Verwendung noch nicht freigegebene und folglich keine Gültigkeitsdauer aufweisende Sicherheitsparameter, oder veraltete Sicherheitsparameter mit abgelaufener Gültigkeitsdauer von dem Sicherheitssystem übernommen werden.

Alternativ oder zusätzlich kann der Parameterblock als weiteres Sicherungsmerkmal zum Abgleich mit den vom Betriebsführungssystem angewandten Steuerungsregeln geeignete Daten umfassen. Dies gilt insbesondere, wenn die von dem Betriebsführungssystem angewandten Steuerungsregeln parametrisiert sind, womit die genannten Daten zum Abgleich mit den Parametrisierungswerten der Steuerungsregeln und/oder daraus gebildeter Prüfsummen ausgebildet sein können. Es kann so eine Überprüfung erfolgen, ob die im Parameterblock enthaltenen Sicherheitsparameter zu der aktuell aufgrund der Parametrisierungswerte durch das Betriebsführungssystem angewandte Steuerung zulässig sind. Neben tatsächlich bei der Steuerung berücksichtigten Parametrisierungswerten lässt sich ein entsprechender Abgleich auch anhand von ggf. vorgesehenen Identifikationsdaten oder Versionsnummern im Satz von Parametrisierungswerten realisieren.

Vorzugsweise enthält der Parameterblock Informationen über die maximal zulässige Betriebsdauer unter den im Parameterblock enthaltenen Sicherheitsparameter. Indem so die maximale Zeit, in der eine Windenergieanlage unter den Sicherheitsparametern des Parameterblocks betrieben werden darf, festgelegt wird, kann bspw. sichergestellt werden, dass ein Testbetrieb mit geänderten Sicherheitsparametern nach der vorgegebenen Betriebsdauer automatisch beendet wird, da die fraglichen Sicherheitsparameter dann ungültig werden.

Es ist bevorzugt, wenn der Parameterblock Informationen über die Betriebsart für den die enthaltenen Sicherheitsparameter gültig sind, enthält. Dadurch wird grundsätzlich ermöglicht, dass die Sicherheitsparameter eines Parameterblocks nur dann zur Überwachung des Betriebs einer Windenergieanlage herangezogen werden, wenn diese in derjenigen Betriebsart, für den der Parameterblock vorgesehen ist, betrieben wird. So kann erreicht werden, dass bspw. ein Betrieb unter Witterungsbedingungen, die einen Eisansatz an den Rotorblättern befürchten lassen, mit den daran angepassten Sicherheitsparametern überwacht wird. Das Sicherheitssystem ist dann bevorzugt dazu ausgebildet, die für eine bestimmte Betriebsart geeigneten Satz an Sicherheitsparametern für die tatsächliche Überwachung heranzuziehen.

Das Sicherheitssystem umfasst vorzugsweise Default-Sicherheitsparameter für den Fall, dass für die aktuelle Betriebsart der Windenergieanlage keine gültigen Sicherheitsparameter vorliegen. Die Default-Sicherheitsparameter können in einem Default-Parameterblock zusammengefasst sein.

Die Default-Sicherheitsparameter, können derart konservativ gewählt sein, dass ein sicherer Betrieb der Windenergieanlage in der aktuellen Betriebsart oder in sämtlichen Betriebsarten möglich ist. Es ist auch möglich, dass die Default-Sicherheitsparameter eine Überführung der Windenergieanlage in einen sicheren Anlagenzustand, bspw. den leistungslosen Trudelbetrieb, überführen.

Die Default-Sicherheitsparameter können bevorzugt in die Betriebssoftware des Sicherheitssystems fest integriert sein, um eine Manipulation der Default-Sicherheitsparameter sicher ausschließen zu können. Es ist aber grundsätzlich auch möglich, dass diese gemäß dem erfindungsgemäßen Verfahren verändert werden können. Vorzugsweise sind wenigstens zwei Default-Sicherheitsparameterblöcke vorgesehen, wobei ein erster Default-Sicherheitsparameterblock für sämtliche Betriebszustände der Windenergieanlage in ihrer tatsächlichen Konfiguration, ein zweiter Default-Sicherheitsparameterblock für sämtliche Windenergieanlagen desselben Typs, aber ggf. unterschiedlicher Konfiguration gelten. Die "Konfiguration" umfasst dabei insbesondere Angaben hinsichtlich des Turms und der Rotorblätter der Windenergieanlage, bspw. Turmhöhe und Rotorblattlänge. Der zweite Default-Sicherheitsparameterblock, der bevorzugt unveränderbar in die Betriebssoftware des Sicherheitssystems integriert ist, stellt einen sicheren Minimalbetrieb der Windenergieanlage, unabhängig von ihrer letztendlichen Konfiguration sicher. Der erste Default-Sicherheitsparameterblock kann demgegenüber die tatsächliche Konfiguration der Windenergieanlage berücksichtigen und grundsätzlich veränderlich sein. Muss auf Default-Sicherheitsparameter zurückgegriffen werden, weil keine gültigen Sicherheitsparameter zur Verfügung stehen, wird der Betrieb grundsätzlich mit den Default-Sicherheitsparametern des ersten Default-Sicherheitsparameterblocks aufrechterhalten und nur, falls diese nicht gültig sein sollten - weil bspw. für eine andere Konfiguration vorgesehen oder beschädigt -, auf die Default-Sicherheitsparametern des zweiten Default-Sicherheitsparameterblocks zurückgegriffen werden. Dadurch wird ein sicherer Betrieb der Windenergieanlage sichergestellt, falls der erste Default-Sicherheitsparameterblock wider Erwarten unzulässig ist.

Auch wenn bereits zwei Sicherungsmerkmale ausreichend sicher sind, ist es bevorzugt, wenn der Parameterblock wenigstens drei, weiter vorzugsweise wenigstens vier unterschiedliche Sicherungsmerkmale umfasst. Jedes zusätzliche Sicherungsmerkmal erhöht die Fehler- und Manipulationssicherheit.

Es ist besonders bevorzugt, wenn sich wenigstens eines der Sicherungsmerkmale auf wenigstens einen Konfigurationsparameter der Windenergieanlage bezieht. In diesem Fall ist es bevorzugt, wenn sich eines des wenigstens einen weiteren Sicherungsmerkmale auf wenigstens einen Teil der Sicherheitsparameter bezieht. Dadurch ist zum einen sichergestellt, dass die Sicherheitsparameter tatsächlich nur dann geändert werden, wenn der Parameterblock tatsächlich für die Windenergieanlage vorgesehen ist, zum anderen wird - je nach verwendetem/n Sicherheitsmerkmal(en), siehe oben - sichergestellt, dass die zu übernehmenden Sicherheitsparameter nicht manipuliert, fehlerfrei übertragen und/oder zur Überwachung der Windenergieanlage zulässig sind. Das genannte weitere Sicherungsmerkmal kann sich auch auf den Parameterblock als Ganzes oder Teile davon beziehen, solange die Sicherheitsparameter wenigstens teilweise mit erfasst sind.

Die Sicherheitsparameter können bspw. eine maximale Drehzahl zur Vermeidung einer Überdrehzahl oder einen Grenzwert für maximal zulässige Schwingungen umfassen. Ein Parameterblock kann bspw. 5 bis 60 Sicherheitsparameter umfassen.

Bei der Überführung der Windenergieanlage in einen sicheren Betriebszustand kann es sich insbesondere um das Stillsetzen der Anlage oder das Überführen in einen leistungslosen Trudelbetrieb handeln.

Es ist möglich, dass verschiedene Parameterblöcke für unterschiedliche Betriebsarten und/oder ein oder mehrere Default-Parametersätze zu einem Parameterblocksatz zusammengefasst sind. In diesem Fall kann es ausreichen, wenn die erfindungsgemäße Prüfung der Sicherungsmerkmale einheitlich für den gesamten Parameterblocksatz und nicht für jeden im Parameterblocksatz enthaltenen Parameterblock einzeln durchgeführt wird.

Die Zusammenfassung mehrerer Parameterblöcke, ggf. inkl. einem oder mehrerer Default-Sicherheitsparameterblöcke in einem Parameterblocksatz ist insbesondere dann vorteilhaft, wenn die so zusammengefassten Parameterblöcke jeweils für unterschiedliche Betriebsarten der Windenergieanlage oder jeweils nur kurze Gültigkeits- und/oder Betriebsdauern aufweisen. Das Sicherheitssystem kann dazu einen Speicher zum Speichern von mehreren Parameterblöcken aufweisen, der sich über einen Parameterblocksatz oder durch sequenzielles übermitteln mehrerer Parameterblöcke füllen lässt, und kann dazu ausgebildet sein, in Abhängigkeit von der Betriebsart der Windenergieanlage die Sicherheitsüberwachung anhand der Sicherheitsparameter eines jeweils gültigen Parameterblocks durchzuführen. Gleiches gilt selbstverständlich auch bei abgelaufener Gültigkeits- und/oder Betriebsdauer eines Parameterblocks. In diesem Fall kann das Sicherheitssystem, vergleichbar zum bereits erläuterten Rückgriff auf Default-Sicherheitsparameter, auf die Sicherheitsparameter eines anderen, noch gültigen und/oder für die aktuelle Betriebsart vorgesehenen Parameterblocks zurückgreifen.

Zur Erläuterung der erfindungsgemäßen Windenergieanlage sowie des erfindungsgemäßen Computerprogrammproduktes wird auf die vorstehenden Ausführungen verwiesen.

Die Erfindung wird nun anhand einer bevorzugten Ausführungsform unter Bezugnahme auf die beigefügten Zeichnungen beispielhaft beschrieben. Es zeigen:
- Figur 1:: eine schematische Darstellung einer zur Durchführung des erfindungsgemäßen Verfahrens ausgebildete Windenergieanlage;
- Figur 2:: eine schematische Darstellung des Zuführens eines Parameterblocks zum Sicherheitssystem der Windenergieanlage gemäß Figur 1; und
- Figur 3:: eine schematische Darstellung der Verwendung eines Parameterblocks durch das Sicherheitssystem der Windenergieanlage gemäß Figur 1.

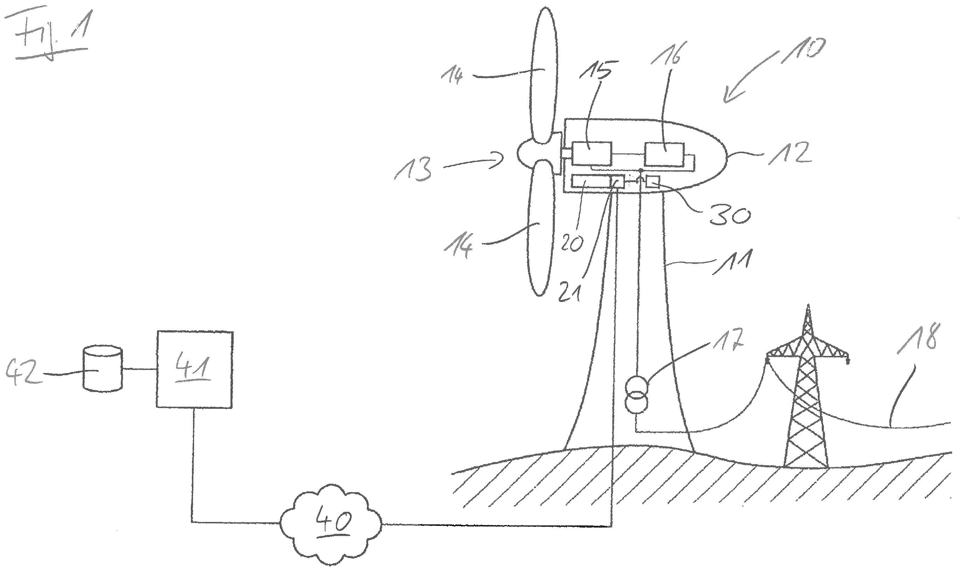

In Figur 1 ist schematisch eine zur Durchführung des erfindungsgemäßen Verfahrens ausgebildete Windenergieanlage 10 dargestellt.

Die Windenergieanlage 10 umfasst zur Umwandlung von Windenergie in elektrische Energie einen an einer drehbar auf einem Turm 11 gelagerten Gondel 12 befestigten Rotor 13 mit zwei oder drei hinsichtlich ihres Blattwinkels einstellbaren Rotorblättern 14. Der Rotor 13 treibt, ggf. unter Zwischenschaltung eines Getriebes, einen Generator 15 an. Die vom Generator 15 kommende elektrische Leistung wird zumindest teilweise über einen Umrichter 16 und einen Transformator 17 umgewandelt, um in ein Hoch- oder Mittelspannungsnetz 18 eingespeist zu werden. Die Umwandlung erfolgt so, dass die elektrische Leistung hinsichtlich der Spannungsamplitude, Frequenz und Phasenverschiebung den Anforderungen des Hoch- oder Mittelspannungsnetzes 17 genügt.

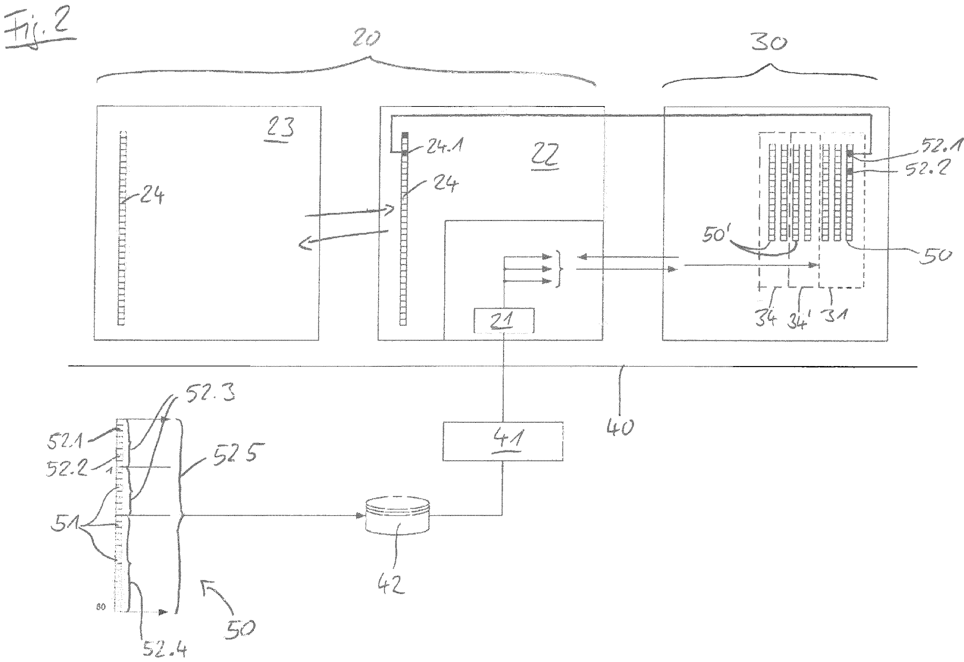

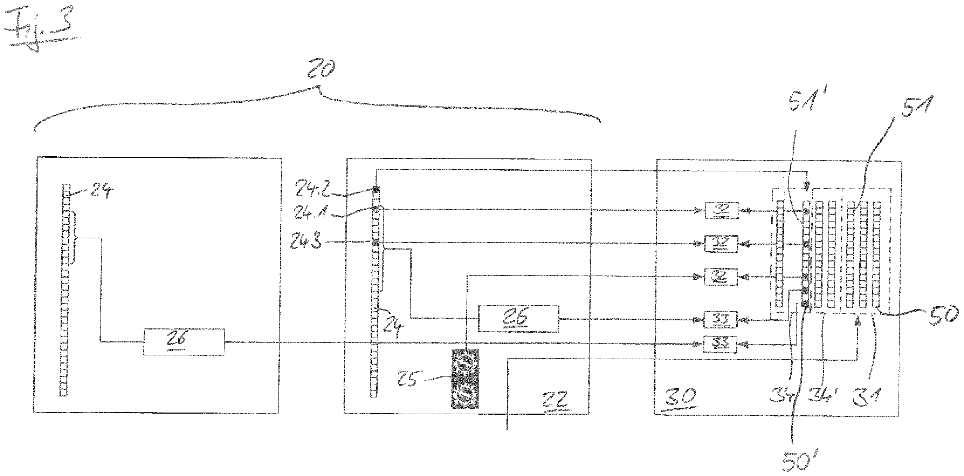

Zur Steuerung der Windenergieanlage 10 ist ein Betriebsführungssystem 20 vorgesehen, welche über nicht dargestellte Steuerleitungen mit den einzelnen Komponenten der Windenergieanlage 10 sowie diversen Sensoren verbunden ist. Das Betriebsführungssystem 20 kann so auf die Komponenten der Windenergieanlage 10 einwirken, dass die Windenergieanlage 10 an einem gewünschten Betriebspunkt betrieben wird und die elektrische Energie gemäß den Anforderungen des Netzes 18 eingespeist wird. Das Betriebsführungssystem 20 steuert die Windenergieanlage 10 basierend auf den über die Sensoren erfassten Messwerten und errechneten oder vorgegebenen Sollwerten, die zu Betriebskennwerten 24 (siehe Figuren 2, 3) zusammengefasst werden, anhand von parametrisierten Steuerungsregeln, deren veränderlichen Parametrisierungswerte in einem Parametersatz zusammengefasst werden können. Das Betriebsführungssystem 20 verfügt über eine Kommunikationseinheit 21, die mit dem Internet 40 verbunden ist.

Ebenfalls mit dem Internet 40 verbunden ist ein Server 41 mit einer Datenbank 42. Der Server 41 und das Betriebsführungssystem 20 sind dazu ausgebildet, einem von dem Betriebsführungssystem 20 verwendeten Parametersatz auf bekannte Weise durch einen in der Datenbank 42 abgelegten neuen Parametersatz zu aktualisieren. Über das Internet 40 können dem Betriebsführungssystem 20 weiterhin noch Steuerungssignale, bspw. vom Netzbetreiber, zugeführt werden.

Die Windenergieanlage 10 umfasst weiterhin Sicherheitssystem 30 zur Überwachung der Windenergieanlage 10 anhand von über das Betriebsführungssystem 20 zur Verfügung gestellten, von den Sensoren des Betriebsführungssystems 20 unmittelbar abgezweigten und/oder durch gesondert für das Sicherheitssystem 30 vorgesehenen Sensoren ermittelten Betriebskennwerten. Bei den Betriebskennwerten kann es sich um Messwerte und/oder um von dem Betriebsführungssystem 20 ermittelten oder zu berücksichtigenden Soll-Werten handeln.

Das Sicherheitssystem 30 ist dazu ausgebildet, die Windenergieanlage 10 vollkommen unabhängig von dem Betriebsführungssystem 20 und damit bspw. bei einem vollständigen Ausfall des Betriebsführungssystems 20 in einen sicheren Anlagenzustand zu überführen, wenn sicherheitskritische Betriebskennwerte gegen im Sicherheitssystem 30 hinterlegte Sicherheitsparameter verstoßen. Im dargestellten Ausführungsbeispiel wird die Windenergieanlage 10 in einem solchen Fall stillgesetzt.

Die erwähnten Sicherheitsparameter lassen sich gemäß dem nachfolgend beschriebenen erfindungsgemäßen Verfahren über das Internet 40 aktualisieren.

Wie in Figur 2 schematisch dargestellt, sind sechzig Sicherheitsparametern 51 zusammen mit verschiedenen Sicherheitsmerkmalen 52.1, 52.2, 52.3, 52.4, 52.5 zu einem Parameterblock 50 zusammengefasst und in der Datenbank 42 abgelegt.

Bei dem Sicherheitsmerkmal 52.1 handelt es sich um Angaben zu dem Typ und der Konfiguration der Windenergieanlage 10, für den der Parameterblock 50 bzw. die darin enthaltenen Sicherheitsparameter 51 vorgesehen sind. Als Sicherheitsmerkmal 52.2 ist eine maximal zulässige Betriebsdauer für den Parameterblock 50 angegeben, über den sichergestellt werden kann, dass die im Parameterblock 50 enthaltenen Sicherheitsparameter 51 nicht länger als vorgesehen verwendet werden.

Diejenigen Angaben im Parameterblock 50, die nicht zu den Sicherheitsparametern 51 gehören (also bspw. umfassend die Sicherheitsmerkmale 52.1 und 52.2), sowie ein Teil der Sicherheitsparameter 51 werden verschlüsselt (Sicherheitsmerkmal 52.3), während über den übrigen Teil der Sicherheitsparameter 51 ein Hash-Wert (Sicherheitsmerkmal 52.4) gebildet wird. Über den gesamten Parameterblock 50 wird außerdem eine zur zyklischen Redundanzprüfung geeignete Prüfsumme (Sicherheitsmerkmal 52.5) gebildet.

Der Parameterblock 50 kann bei Bedarf von dem Server 41 über das Internet 40 an die Kommunikationseinheit 21 des Betriebsführungssystems 20 übertragen werden, welches im dargestellten Ausführungsbeispiel ein verteiltes System mit jeweils parametrisierter Hauptsteuerung 22 und Blattwinkelsteuerung 23 ist, die auf Basis von Betriebskennwerten 24 anhand vorgegebener Regeln die Windenergieanlage 10 steuern.

Von der Kommunikationseinheit 21 wird der Parameterblock 50 an das Sicherheitssystem 30 übermittelt, welches einen Speicherbereich 31 für empfangene Parameterblöcke 50 aufweist. Dabei ist es möglich, einen einzelnen Parameterblock 50 an das Sicherheitssystem 30 zu übermitteln. Es ist aber auch möglich, mehrere Parameterblöcke 50 zu einem Parameterblocksatz zusammenzufassen und nur diesen dann zu übermitteln. Dabei ist es möglich, dass zumindest ein Teil der beschriebenen Sicherungsmerkmale, wie bspw. die Prüfsumme 52.5, nicht für jeden Parameterblock 50 eines Parameterblocksatzes einzeln, sondern vielmehr nur für den Parameterblocksatz als Ganzes ermittelt wird.

Dabei werden im dargestellten Ausführungsbeispiel bereits durch die Kommunikationseinheit 21 einige der Sicherungsmerkmale 52 des Parameterblocks 50 überprüft. So wird mithilfe der Prüfsumme 52.5 überprüft, ob die Datenübertragung fehlerfrei erfolgt ist und, falls nicht und sofern dies möglich ist, eine Korrektur der Daten über eine zyklische Redundanzprüfung vorgenommen wird. Anschließend wird überprüft, ob sich die verschlüsselten Daten 52.3 entschlüsseln lassen, und es findet eine Überprüfung des Hash-Wertes 52.4 statt. Nur wenn diese Überprüfungen erfolgreich abgeschlossen sind, wird der (entschlüsselte) Parameterblock 50 dem Speicherbereich 31 des Sicherheitssystems 30 zugeführt. Die vorstehend beschriebenen Prüfungen können alternativ auch unmittelbar durch das Sicherheitssystem 30 durchgeführt werden, wobei die Kommunikationseinheit 21 dann den Parameterblock 50 lediglich wie Empfangen an das Sicherheitssystem weiterleitet und dort die Prüfsummen-, Hash-Wert- und Verschlüsselungsprüfung durchgeführt wird.

Das Sicherheitssystem 30 prüft anschließend, ob die im empfangenen Parameterblock 50 enthaltenen Angaben 52.1 zu dem Typ und der Konfiguration der Windenergieanlage 10 mit den entsprechenden im Speicher der Hauptsteuerung 22 des Betriebsführungssystems 20 hinterlegten Konfigurationsparametern übereinstimmt, womit die Konfigurationsparameter als Prüfinformationen 24.1 genutzt werden. Alternativ dazu kann auch ein Teil der für diesen Vergleich erforderlichen Prüfinformationen 24.1 auch über Schaltelemente 25, wie sie in Figur 3 dargestellt sind, eingestellt sein.

Außerdem wird durch das Sicherheitssystem 30 anhand der Gültigkeitsdauer 52.2 noch geprüft, ob der geladene Parameterblock 50 grundsätzlich gültig ist.

Wenn eine der vorstehend erläuterten Prüfungen negativ verlaufen ist, wird der empfangene Parameterblock 50 als ungültig markiert und ggf. aus dem Speicherbereich 31 gelöscht. Je nachdem welche der vorstehenden Prüfungen negativ ausgefallen ist, kann der Parameterblock 50 in dem Speicherbereich 31 nämlich zu einem späteren Zeitpunkt den fraglichen Prüfungen erneut unterzogen werden, wo er dann ggf. als gültig identifiziert wird. Insbesondere wenn die negativ ausgefallene Prüfung auch in Zukunft kein anderes Ergebnis erwarten lässt, kann der Parameterblock 50 auch unmittelbar verworfen werden.

Bei sämtlich positivem Ausgang der Prüfungen bleibt der Parameterblock 50 im Speicherbereich 31 des Sicherheitssystems 30 bestehen und kann für die tatsächliche Überwachung der Windenergieanlage 10 genutzt werden.

Neben dem Speicherbereich 31 für empfangene Parameterblöcke 50 umfasst das Sicherheitssystem 30 noch einen Speicherbereich 34, 34` für Default-Parameterblöcke 50', wobei in einem Teil des Speicherbereichs 34 unveränderliche und bspw. fest in die Steuerungssoftware einkompilierte Default-Parameterblöcke 50' hinterlegt sind, während die Default-Parameterblöcke 50' in dem anderen Teil des Speicherbereichs 34` analog zu dem beschriebenen Verfahren der Aktualisierung der Parameterblöcke 50 im Speicherbereich 31 aktualisiert werden können.

Bei einem der Default-Parameterblöcke 50' kann es sich um einen Universal-Default-Parameterblock handeln, der für sämtliche Betriebsarten der Windenergieanlage und zu jeder Zeit gültig ist. Aufgrund der allgemeinen Gültigkeit kann dieser Universal-Default-Parameterblock fest in die Steuerungssoftware einkompiliert werden und muss in der Folge keiner weiteren Sicherheitsprüfung unterzogen werden. Der Universal-Default-Parameterblock kann sogar unabhängig vom Typ und der Konfiguration der Windenergieanlagen einen sicheren Anlagenzustand, insbesondere einen Stillstand oder sicheren Trudelbetrieb der Windenergieanlage, definieren.

In Figur 3 wird eine letztendliche Verwendung von Parameterblöcken 50 und Default-Parameterblöcken 50' zur Überwachung der Windenergieanlage 10 erläutert. Grundsätzlich erfolgt die Verwendung von Parameterblöcken 50 und Default-Parameterblöcken 50' dabei vollständig analog, weshalb die nachfolgenden Erläuterungen zur Verwendung eines Default-Parameterblocks 50' auch für geladene Parameterblöcke 50, allerdings mit der Maßgabe, dass die Überwachung anhand eines geladenen Parameterblocks 50 nur dann erfolgen kann, wenn zugleich für die aktive Betriebsart der Windenergieanlage 10 auch ein gültiger Default-Parametersatz vorliegt. Bei dem gültigen Default-Parametersatz kann es sich insbesondere um einen Universal-Default-Parametersatz handeln.

Bei der in Figur 3 dargestellten Ausführungsvariante wird ein Großteil der Sicherheitsmerkmale 52.1- 52.5 , darunter auch solche, die in Zusammenhang mit der in Figur 2 gezeigten Übermittlung bereits geprüft wurden, erneut überprüft. Durch diese, teilweise auch wiederholte Überprüfung der Sicherheitsmerkmale wird die Zuverlässigkeit des Sicherheitssystems 30 noch weiter erhöht.

In Figur 3 weist die Hauptsteuerung 22 Schaltelemente 25 auf, mit denen die Konfiguration der Windenergieanlage 10, deren Typ als Betriebskennwert 24 abgelegt ist, spezifiziert wird. Im dargestellten Ausführungsbeispiel wird über die Schaltelemente 25 bspw. eine Codierung eingegeben, welche die Typen des Turms 11, der Rotorblätter 14, des Generators 15, des Umrichters 16 und/oder weiterer Komponenten, die in der Windenergieanlage 10 verbaut sind, widerspiegeln. Vorteilhaft sind die Schaltelemente so ausgebildet, dass sie eine eindeutige Codierung der Anlagenkonfiguration ermöglichen. Es ist aber selbstverständlich auch möglich, dass die entsprechenden Informationen als unmittelbarer Teil der Konfigurationsparameter 24.1 hinterlegt sind, womit die Schaltelemente 25 dann entfallen können. Die Schaltelemente 25 sind unmittelbar an der Windenergieanlage 10 angeordnet. Durch die Einstellung der beschriebenen Codierung unmittelbar vor Ort der Windenergieanlage 10 wird sichergestellt, dass falsche oder bewusst manipulierte Parameterblöcke 50 nicht übernommen werden, da diese grundsätzlich nicht zu der über die Codierung angegebenen Anlagenkonfiguration passen werden.

Alternativ zu den in Figur 3 dargestellten Drehschaltern kann das Schaltelement 25 auch DIP-Schalter, bspw. 32bit-DIP-Schalter umfassen, die einfach abgefragt werden können.

Die Hauptsteuerung 22 des Betriebsführungssystems 20 gibt dem Sicherheitssystem 30 die aktuelle Betriebsart der Windenergieanlage 10 als in Form eines Betriebskennwerts vorliegenden Codes 24.2 vor. Basierend auf dieses Codes 24.2 überprüft das Betriebsführungssystem 20 zunächst, ob im Speicherbereich 31 ein für diese Betriebsart gültiger Parameterblock 50 vorliegt. Ist dies nicht der Fall, wird der für die Betriebsart gültige Default-Parameterblock 50' ermittelt, wobei auch hier zunächst im Speicherbereich 34` nach gültigen Default-Parameterblöcken 50' gesucht wird, bevor auf die Default-Parameterblöcke 50' und in letzter Instanz ggf. auf einen Universal-Default-Parametersatz im Speicherbereich 34 zurückgegriffen wird.

Auf die Default-Parameterblöcke 50' wird auch dann (in der vorgegebenen Reihenfolge) zurückgegriffen, wenn ein für die aktuelle Betriebsart grundsätzlich geeigneter Parameterblock 50 im Speicherbereich 31 gefunden wird, für den aber die nachfolgend beschriebenen Prüfungen nicht sämtlich positiv abgeschlossen werden können. Gleiches gilt für den Übergang von Default-Parameterblöcken 50' aus dem Speicherbereich 34' und Default-Parameterblöcken 50' aus dem Speicherbereich 34. Wird überhaupt kein gültiger Parameterblock 50 bzw. Default-Parameterblock 50' für die aktuelle Betriebsart gefunden, wird die Windenergieanlage 10 unmittelbar stillgesetzt bzw. in einen sicheren Anlagenzustand überführt. Letzteres kann insbesondere durch Rückgriff auch einen Universal-Default-Parametersatz erreicht werden.

Vor der Verwendung eines über die Betriebsart 24.2 grundsätzlich identifizierten Parameterblocks 50 bzw. Default-Parameterblocks 50' gleicht das Sicherheitssystem 30 die Konfigurationsparameter 24.1 sowie ggf. weitere allgemeine Informationen 24.3 zur aktuellen Betriebsart sowie die über die Schaltelemente 25 vergebene Codierung der Anlagenkonfiguration mit entsprechenden Sicherungsmerkmalen 52 in dem zu prüfenden Parameterblock 50 bzw. Default-Parameterblocks 50' durch Vergleichsmodule 32 ab. Nur wenn sämtliche Prüfungen positiv abgeschlossen werden, wird der geprüfte Parameterblock 50 bzw. Default-Parameterblock 50' für die Überwachung der Windenergieanlage 10 verwendet. Ist dies nicht der Fall, wird anstelle des geprüften Parameterblocks 50 bzw. Default-Parameterblocks 50' ein weiterer, grundsätzlich in Frage kommender Parameterblock 50 oder Default-Parameterblock 50' in der oben angegebenen Reihenfolge geprüft, bis ein gültiger Parameterblock 50 oder Default-Parameterblock 50' gefunden wird. Wird kein gültiger Parameterblock 50 bzw. Default-Parameterblock 50' gefunden, wird die Windenergieanlage 10 stillgesetzt bzw. in einen sicheren Anlagenzustand überführt. Hierzu kann insbesondere auf einen, den gewünschten Anlagenzustand definierenden Universal-Default-Parametersatz zurückgegriffen werden.

Der aktuell zur Überwachung genutzte Parameterblock 50 bzw. Default-Parameterblock 50' wird in regelmäßigen Abständen auf seine Gültigkeit hin überprüft, um so bspw. einen Ablauf der maximal zulässigen Betriebsdauer feststellen zu können. In diesem Fall wird das Sicherheitssystem 30 auf die beschriebene Art und Weise einen gültigen Parameterblock 50 bzw. Default-Parameterblock 50' ermitteln.

Die eigentliche Überwachung des Betriebs der Windenergieanlage 10 erfolgt im Wesentlichen wie aus dem Stand der Technik bekannt, weshalb sie nachfolgend nur kurz umrissen werden muss.

Sowohl in der Hauptsteuerung 22 als auch in der Blattwinkelsteuerung 23 sind Berechnungsmodule 26 vorgesehen, die aus jeweils vordefinierten Teilen der in den Steuerungen jeweils vorliegenden Betriebskennwerten 24 einen Prüfwert ermitteln, der dann an das Sicherheitssystem 30 übermittelt wird. Dort wird der Prüfwert mit in dem jeweils aktuellen Parameterblock 50 enthaltenen Sicherheitsparametern 51 abgeglichen. Liegt der Prüfwert außerhalb des durch die Sicherheitsparameter 51 vorgegebenen Bereichs, löst das Sicherheitssystem 30 einen Nothalt der Windenergieanlage aus.

Neben den von der Hauptsteuerung 22 und der Blattwinkelsteuerung 23 zugeführten Prüfwerten überwacht das Sicherheitssystem 30 in gleicher Weise auch unmittelbar gemessene Werte, bspw. hinsichtlich der Drehzahl des Rotors 13 oder der Vibrationen in der Gondel 12, und setzt die Windenergieanlage 10 still oder überführt sie in einen sicheren Trudelbetrieb, wenn diese Werte einen über Sicherheitsparameter 51 des jeweils aktuellen Parameterblocks 50, 50' vorgegebenen Betriebsbereich verlassen. An diese komplett vom Betriebsführungssystem 20 unabhängig gemessenen Werte sind besonders hohe Anforderungen bezüglich der Fehlerfreiheit der Messwerte zu stellen, weshalb bevorzugt für diese Messwerte auf besonders zuverlässige Sensoren und Auswerteelektronik zurückgegriffen wird.

## Patentansprüche

1. Verfahren zum Betreiben einer Windenergieanlage (10) umfassend ein Betriebsführungssystem (20) zur Steuerung der Windenergieanlage gemäß vorgegebenen Regeln und ein vom Betriebsführungssystem (20) getrenntes Sicherheitssystem (30) zur Überwachung der Windenergieanlage (10) anhand von Betriebskennwerten (24), wobei das Sicherheitssystem (30) die Windenergieanlage (10) unabhängig vom Betriebsführungssystem (20) in einen sicheren Anlagenzustand überführt, wenn sicherheitskritische Betriebskennwerte (24) gegen im Sicherheitssystem (30) hinterlegte Sicherheitsparameter (51) verstoßen,
**dadurch gekennzeichnet, dass**
zur Änderung wenigstens eines im Sicherheitssystem (30) hinterlegten Sicherheitsparameter (51) dem Sicherheitssystem (30) ein Parameterblock (50) umfassend den wenigstens einen Sicherheitsparameter (51) und wenigstens zwei Sicherungsmerkmale (52) zugeführt und nur nach positiver Prüfung aller Sicherungsmerkmale (52) von dem Sicherheitssystem (30) für die Überwachung übernommen wird, wobei die Prüfung wenigstes eines der Sicherungsmerkmale (52) den Abgleich mit unmittelbar an der Windenergieanlage (10) verfügbaren Prüfinformationen (24.1, 25) erfordert.

2. Verfahren nach Anspruchs 1,
**dadurch gekennzeichnet, dass**
die Prüfinformationen (24.1, 25) wenigstens einen Konfigurationsparameter umfassen, wobei wenigstens ein weiteres Sicherungsmerkmal sich wenigstens teilweise auf die Sicherheitsparameter (51) bezieht.

3. Verfahren nach einem der vorhergehenden Ansprüche,
**dadurch gekennzeichnet, dass**
ein Sicherungsmerkmal (52) wenigstens eine Prüfsumme (52.5), vorzugsweise eine zyklische Redundanzprüfung, ein Hash-Wert (52.4) und/oder eine digitale Signatur oder Verschlüsselung (52.3) über die Sicherheitsparameter (51), den Parameterblock (50) und/oder jeweils Teile davon ist.

4. Verfahren nach einem der vorhergehenden Ansprüche,
**dadurch gekennzeichnet, dass**
ein Sicherungsmerkmal (52) eine in dem Parameterblock (50) enthaltene Gültigkeitsdauer (52.2) ist.

5. Verfahren nach einem der vorhergehenden Ansprüche,
**dadurch gekennzeichnet, dass**
ein Sicherungsmerkmal (52) zum Abgleich mit den vom Betriebsführungssystem (20) angewandten Steuerungsregeln geeignete Daten sind, wobei die Steuerungsregeln vorzugsweise parametrisiert sind und die Daten zum Abgleich mit den Parametrisierungswerten der Steuerungsregeln und/oder daraus gebildeter Prüfsummen ausgebildet sind.

6. Verfahren nach einem der vorhergehenden Ansprüche,
**dadurch gekennzeichnet, dass**
der Parameterblock (50) Informationen über die maximal zulässige Betriebsdauer unter den darin enthaltenen Sicherheitsparametern (51) enthält.

7. Verfahren nach einem der vorhergehenden Ansprüche,
**dadurch gekennzeichnet, dass**
der Parameterblock (50) Informationen über den Betriebszustand (24.3), für den die enthaltenen Sicherheitsparameter gültig sind, umfasst und das Sicherheitssystem (30) die für den jeweils aktuellen Betriebszustand der Windenergieanlage (1) vorgesehene Sicherheitsparameter (51) anwendet.

8. Verfahren nach einem der vorhergehenden Ansprüche,
**dadurch gekennzeichnet, dass**
das Sicherheitssystem einen Default-Parameterblock (50') oder Default-Sicherheitsparameter (51') für den Fall, dass für den aktuellen Betriebszustand der Windenergieanlage (10) kein gültiger Parameterblock (50) oder keine gültigen Sicherheitsparameter (51) vorliegen, umfasst.

9. Verfahren nach einem der vorhergehenden Ansprüche,
**dadurch gekennzeichnet, dass**
das Sicherheitssystem einen Speicher zum Speichern von mehreren Parameterblöcken (50) aufweist und dazu ausgebildet ist, in Abhängigkeit von der Betriebsart der Windenergieanlage (10) die Sicherheitsüberwachung anhand der Sicherheitsparameter (51) eines jeweils gültigen Parameterblocks (50) durchzuführen.

10. Verfahren nach einem der vorhergehenden Ansprüche,
**dadurch gekennzeichnet, dass**
die Sicherheitsparameter (50) eine maximale Drehzahl zur Vermeidung einer Überdrehzahl oder einen Grenzwert für maximal zulässige Schwingungen umfasst.

11. Verfahren nach einem der vorhergehenden Ansprüche,
**dadurch gekennzeichnet, dass**
ein Parameterblock (50) 5 bis 60 Sicherheitsparameter umfasst.

12. Windenergieanlage (10) umfassend einen Rotor (13) mit mehreren, hinsichtlich des Blattwinkels einstellbaren Rotorblättern (14), der drehbar an einer drehbar auf einem Turm (11) angeordneten Gondel (12) angeordnet und mit einem in der Gondel (12) angeordneten Generator (15) zur Umwandlung von auf den Rotor (13) einwirkenden Windenergie in elektrische Energie verbunden ist, ein Betriebsführungssystem (20) zur Steuerung der Windenergieanlage (10) gemäß vorgegebenen Regeln und ein vom Betriebsführungssystem (20) getrenntes Sicherheitssystem (30) zur Überwachung der Windenergieanlage (10) anhand von Betriebskennwerten, wobei das Sicherheitssystem (30) dazu ausgebildet ist, die Windenergieanlage (10) unabhängig vom Betriebsführungssystem (20) in einen sicheren Anlagenzustand zu überführen, wenn sicherheitskritische Betriebskennwerte gegen im Sicherheitssystem (30) hinterlegte Sicherheitsparameter verstoßen,
**dadurch gekennzeichnet, dass**
die Windenergieanlage (10) zur Durchführung des Verfahrens gemäß einem der Ansprüche 1 bis 11 ausgebildet ist.

13. Computerprogrammprodukt umfassend Programmteile, welche, wenn geladen in einem Computer, vorzugsweise die Anlagensteuerung (20) einer Windenergieanlage (1), zur Durchführung des Verfahrens nach einem der Ansprüche 1 bis 11 ausgelegt sind.

## Claims

1. Method for operating a wind turbine (10) comprising a management system (20) for controlling the wind turbine according to prescribed rules and a safety system (30), separate from the management system (20), for monitoring the wind turbine (10) on the basis of operational characteristic values (24), wherein the safety system (30) transfers the wind turbine (10) to a safe plant state independently of the management system (20) if safety-critical operational characteristic values (24) violate safety parameters (51) stored in the safety system (30),
**characterized in that**
in order to change at least one safety parameter (51) stored in the safety system (30) a parameter block (50) comprising the at least one safety parameter (51) and at least two safety features (52) is supplied to the safety system (30) and accepted by the safety system (30) for the monitoring only after a positive check on all of the safety features (52), wherein the check on at least one of the safety features (52) requires comparison against check information (24.1, 25) available directly on the wind turbine (10).

2. Method according to Claim 1,
**characterized in that**
the check information (24.1, 25) comprises at least one configuration parameter, wherein at least part of at least one further safety feature relates to the safety parameters (51).

3. Method according to either of the preceding claims,
**characterized in that**
a safety feature (52) is at least one checksum (52.5), preferably a cyclic redundancy check, a hash value (52.4) and/or a digital signature or encryption (52.3) for the safety parameters (51), the parameter block (50) and/or respective parts thereof.

4. Method according to one of the preceding claims,
**characterized in that**
a safety feature (52) is a validity period (52.2) contained in the parameter block (50).

5. Method according to one of the preceding claims,
**characterized in that**
a safety feature (52) is data suitable for comparison against the control rules applied by the management system (20), wherein the control rules are preferably parameterized and the data are designed for comparison against the parameterization values of the control rules and/or checksums formed therefrom.

6. Method according to one of the preceding claims,
**characterized in that**
the parameter block (50) contains information about the maximum permissible operating period under the safety parameters (51) contained therein.

7. Method according to one of the preceding claims,
**characterized in that**
the parameter block (50) comprises information about the operating state (24.3) for which the contained safety parameters are valid and the safety system (30) applies the safety parameters (51) intended for the respective present operating state of the wind turbine (1).

8. Method according to one of the preceding claims,
**characterized in that**
the safety system comprises a default parameter block (50') or default safety parameter (51') for if no valid parameter block (50) or no valid safety parameters (51) are available for the present operating state of the wind turbine (10).

9. Method according to one of the preceding claims,
**characterized in that**
the safety system has a memory for storing multiple parameter blocks (50) and is designed to take the mode of operation of the wind turbine (10) as a basis for performing the safety monitoring on the basis of the safety parameters (51) of a respective valid parameter block (50) .

10. Method according to one of the preceding claims,
**characterized in that**
the safety parameters (50) comprise a maximum rotational speed to avoid an overspeed or a limit value for maximum permissible vibrations.

11. Method according to one of the preceding claims,
**characterized in that**
a parameter block (50) comprises 5 to 60 safety parameters.

12. Wind turbine (10) comprising a rotor (13) having multiple rotor blades (14), which are adjustable in terms of blade angle, that is arranged rotatably on a nacelle (12) arranged rotatably on a tower (11) and is connected to a generator (15), arranged in the nacelle (12), for converting wind energy acting on the rotor (13) into electrical energy, a management system (20) for controlling the wind turbine (10) according to prescribed rules and a safety system (30), separate from the management system (20), for monitoring the wind turbine (10) on the basis of operational characteristic values, wherein the safety system (30) is designed to transfer the wind turbine (10) to a safe plant state independently of the management system (20) if safety-critical operational characteristic values violate safety parameters stored in the safety system (30),
**characterized in that**
the wind turbine (10) is designed to perform the method according to one of Claims 1 to 11.

13. Computer program product comprising program parts that, when loaded in a computer, preferably the plant control unit (20) of a wind turbine (1), are designed to perform the method according to one of Claims 1 to 11.

## Revendications

1. Procédé pour faire fonctionner un aérogénérateur (10), comprenant un système de gestion opérationnelle (20) destiné à commander l'aérogénérateur conformément à des règles prédéfinies et un système de sécurité (30), séparé du système de gestion opérationnelle (20), destiné à surveiller l'aérogénérateur (10) à l'aide de valeurs caractéristiques de fonctionnement (24), le système de sécurité (30) amenant l'aérogénérateur (10) dans un état d'installation sécurisé indépendamment du système de gestion opérationnelle (20) lorsque des valeurs caractéristiques de fonctionnement (24) déterminantes pour la sécurité violent des paramètres de sécurité (51) stockés dans le système de sécurité (30),
**caractérisé en ce que**
en vue de modifier au moins un paramètre de sécurité (51) stocké dans le système de sécurité (30), un bloc de paramètres (50) comprenant l'au moins un paramètre de sécurité (51) et au moins deux caractéristiques de sûreté (52) sont acheminés au système de sécurité (30) et ne sont pris en charge par le système de sécurité (30) qu'après un contrôle positif de toutes les caractéristiques de sûreté (52), le contrôle d'au moins l'une des caractéristiques de sûreté (52) exigeant la comparaison avec des informations de contrôle (24.1, 25) disponibles directement sur l'aérogénérateur (10).

2. Procédé selon la revendication 1, **caractérisé en ce que** les informations de contrôle (24.1, 25) comportent au moins un paramètre de configuration, au moins une caractéristique de sûreté supplémentaire se rapportant au moins partiellement au paramètre de sécurité (51).

3. Procédé selon l'une des revendications précédentes, **caractérisé en ce qu'**une caractéristique de sûreté (52) est au moins une somme de contrôle (52.5), de préférence un contrôle de redondance cyclique, une valeur de hachage (52.4) et/ou une signature numérique ou un cryptage (52.3) sur le paramètre de sécurité (51), le bloc de paramètres (50) et/ou respectivement des parties de celui-ci .

4. Procédé selon l'une des revendications précédentes, **caractérisé en ce qu'**une caractéristique de sûreté (52) est une durée de validité (52.2) incluse dans le bloc de paramètres (50).

5. Procédé selon l'une des revendications précédentes, **caractérisé en ce qu'**une caractéristique de sûreté (52) est des données appropriées pour la comparaison avec des règles de commande appliquées par le système de gestion opérationnelle (20) et les données sont configurées pour la comparaison avec les valeurs de paramétrage des règles de commande et/ou des sommes de contrôle formées à partir de celles-ci.

6. Procédé selon l'une des revendications précédentes, **caractérisé en ce que** le bloc de paramètres (50) contient des informations à propos de la durée de fonctionnement maximale admissible avec les paramètres de sécurité (51) qu'il contient.

7. Procédé selon l'une des revendications précédentes, **caractérisé en ce que** le bloc de paramètres (50) contient des informations à propos de l'état opérationnel (24.3) pour lequel les paramètres de sécurité qu'il contient sont valides, et le système de sécurité (30) applique les paramètres de sécurité (51) prévus pour l'état opérationnel respectivement actuel de l'aérogénérateur (1).

8. Procédé selon l'une des revendications précédentes, **caractérisé en ce que** le système de sécurité comporte un bloc de paramètres par défaut (50') ou des paramètres de sécurité par défaut (51') pour le cas où il n'existe aucun bloc de paramètres (50) valide ni aucun paramètre de sécurité (51) valide pour l'état opérationnel actuel de l'aérogénérateur (10).

9. Procédé selon l'une des revendications précédentes, **caractérisé en ce que** le système de sécurité possède une mémoire destinée à mémoriser plusieurs blocs de paramètres (50) et il est configuré pour réaliser la surveillance de sécurité à l'aide des paramètres de sécurité (51) d'un bloc de paramètres (50) respectivement valide en fonction du mode de fonctionnement de l'aérogénérateur (10) .

10. Procédé selon l'une des revendications précédentes, **caractérisé en ce que** les paramètres de sécurité (50) comprennent une vitesse de rotation maximale destinée à éviter une vitesse de rotation excessive ou une valeur limite pour des vibrations maximales admissibles.

11. Procédé selon l'une des revendications précédentes, **caractérisé en ce qu'**un bloc de paramètres (50) comporte 5 à 60 paramètres de sécurité.

12. Aérogénérateur (10), comprenant un rotor (13) pourvu de plusieurs pales de rotor (14), réglables en ce qui concerne l'angle de pale, lequel est monté à rotation sur une nacelle (12) montée à rotation sur un mât (11) et lequel est relié à un générateur (15) disposé dans la nacelle (12) servant à convertir l'énergie éolienne agissant sur le rotor (13) en énergie électrique, un système de gestion opérationnelle (20) destiné à commander l'aérogénérateur (10) conformément à des règles prédéfinies et un système de sécurité (30) séparé du système de gestion opérationnelle (20), destiné à surveiller l'aérogénérateur (10) à l'aide de valeurs caractéristiques de fonctionnement, le système de sécurité (30) étant configuré pour amener l'aérogénérateur (10) dans un état d'installation sécurisé indépendamment du système de gestion opérationnelle (20) lorsque des valeurs caractéristiques de fonctionnement déterminantes pour la sécurité violent des paramètres de sécurité stockés dans le système de sécurité (30),
**caractérisé en ce que**
l'aérogénérateur (10) est configuré pour mettre en œuvre le procédé selon l'une des revendications précédentes 1 à 11.

13. Produit de programme informatique comprenant des parties de programme qui, lorsqu'elles sont chargées dans un ordinateur, de préférence la commande d'installation (20) d'un aérogénérateur (1), sont conçues pour mettre en œuvre le procédé selon l'une des revendications précédentes 1 à 11.
